# FASCICULE DE BREVET EUROPEEN

(11) **EP 1 140 487 B1**
(45) Date de publication et mention de la délivrance du brevet: **17.01.2007**
(21) Numéro de dépôt: 99972970.0
(22) Date de dépôt: 03.11.1999
(51) Int. Cl.: B32B 7/06, B32B 27/32, B65D 77/20

(54) **Sac ou sachet formant un emballage comprenant un film multicouche résistant à la déchirure**
Tasche oder Tüte aus einem reißfesten Mehrschichtfilm
Bag or pouch comprising a tear-resistant multilayer film

(30) Priorité: 27.11.1998 IT MI982572
(43) Date de publication de la demande: 10.10.2001
(73) Titulaire: Soplaril Italia SpA, 20024 Garbagnate Milanese (IT)
(72) Inventeur: BIGAZZI, Mauro, I-16011 Arenzano (IT)
(74) Mandataire: Pigasse, Daniel
(86) Numéro de dépôt international: PCT/EP1999/008426
(87) Numéro de publication internationale: WO 2000/032390

(56) Documents cités:
- WO-A-98/32596
- GB-A- 1 379 996
- GB-A- 2 296 466
- US-A- 5 888 599

## Description

L'invention concerne un sac ou sachet formant un emballage comprenant un film comprenant au moins deux couches dont l'une provient d'un support et l'autre est en une matière thermoplastique, ces deux couches pouvant ci-après être appelées couches principales. La couche en une matière thermoplastique est appelée ci-après couche thermoplastique. Le film comprend, pour au moins une partie de sa surface une couche d'une matière organique située entre les deux couches principales. La couche de matière organique favorise la délamination du film lorsque celui-ci est soumis à une contrainte favorisant la formation ou la propagation d'une déchirure. L'invention concerne un film à la résistance à la déchirure améliorée et trouve en particulier une utilité pour l'emballage d'articles, par exemple d'aliments.

La résistance du film à la déchirure est améliorée dans les zones du film pour lesquelles la matière organique a été appliquée. En appliquant la matière organique à certaines zones du film seulement, et, comme cela a été mentionné entre les deux couches principales, il est possible de réaliser un film présentant un comportement différent dans ses différentes zones sous l'effet des contraintes mécaniques. Les zones ayant été traitées par la matière organique présentent, en comparaison avec les zones non traitées par la matière organique, une plus forte tendance à la délamination mais une plus forte résistance à la déchirure et à la traction. La demanderesse a en effet découvert que lorsque la matière organique entraînait une délamination du film, ce dernier présentait une meilleure résistance à la déchirure. La matière organique a donc pour fonction de favoriser la délamination du film et d'augmenter sa résistance à la déchirure lorsque ledit film est soumis à une tension ou une déchirure. Ainsi, grâce à l'invention, il est possible de réaliser à partir d'un film continu unique un emballage présentant une forte résistance à la délamination en certains endroits (non traités par la matière organique) et une forte résistance à la déchirure à d'autres endroits (traités par la matière organique).

Habituellement, l'homme du métier choisit les matières devant entrer dans la constitution d'un film multicouche de façon à ce que chaque couche présente la plus forte adhésion possible avec sa ou ses couches voisines. Ainsi, les films multicouches ne présentent pas une force de délamination inférieure à 200 grammes pour une largeur de film de 15 mm. L'invention va à contre-sens de cette démarche. En effet, la matière organique a pour fonction de faire baisser la force de délamination du film, généralement à une valeur inférieure à 200 g, de préférence inférieure à 100 g, de manière encore préférée inférieure à 50 g, par exemple allant de 5 à 40 g pour une largeur de film de 15 mm, ces valeurs pouvant être mesurées selon la norme NFT-54034. Ainsi, le film selon l'invention peut présenter au moins une zone dans laquelle la force de délaminage correspond aux valeurs qui viennent d'être données (présence de la matière organique) et au moins une autre zone (absence de matière organique) dans laquelle la force de délaminage est supérieure à 200 g, voire supérieure à 300 g pour une largeur de film de 15 mm.

Un tel film présentant des propriétés différentes dans des zones différentes réponds à des besoins particuliers dans le domaine de l'emballage. Par exemple, il est possible d'améliorer sensiblement la résistance à la déchirure des sacs en plastique destinés à porter des articles. De tels sacs, réalisés avec des films, comportent souvent des anses constitués par des orifices dans le film du sac. L'utilisateur porte le sac en plaçant sa main dans l'orifice. Ces orifices sont souvent réalisés par un simple perçage du film, et aucun ajout de matière ne vient habituellement renforcer ces endroits. Le film subit, dans la région de ces orifices des contraintes mécaniques importantes sous l'effet de la charge du sac, pouvant conduire à un déchirement. De plus, il est également intéressant sur le plan économique et écologique, de savoir réaliser des sacs les plus résistants possibles à partir de films les plus fins possibles.

Il existe également un besoin de savoir orienter la déchirure d'un emballage en plastique. Ainsi, lorsqu'un consommateur souhaite déchirer un emballage pour pouvoir accéder à son contenu, par exemple une matière alimentaire, il peut être souhaité que la déchirure soit réalisée facilement et de façon contrôlée dans une zone déterminée de l'emballage, de façon à éviter que l'emballage ne risque d'être déchiré sur une trop grande étendue, ce qui limiterait ses possibilités de réemploi. En effet, l'utilisateur peut souhaiter ne retirer qu'une partie du contenu et laisser le reste dans son emballage d'origine afin qu'il préserve le plus longtemps possible une fraîcheur le rendant apte à être consommé.

L'invention répond aux problèmes susmentionnés. En effet, en plaçant judicieusement la matière organique dans certaines régions d'un film d'emballage, il est possible de modifier la résistance à la déchirure de différentes zones de l'emballage.

Le film compris dans le sac ou sachet formant un emballage selon l'invention comprend au moins deux couches principales, mais bien entendu le film peut comprendre des couches supplémentaires, notamment de matériau thermoplastique. Chaque couche principale peut elle-même être constituée de plusieurs couches. Les deux couches principales sont celles dont on attend l'essentiel des propriétés mécaniques du film. De même, la couche de matière organique peut être constituées de plusieurs couches de matière organique.

La couche en matière thermoplastique peut être en polyoléfine comme en polymère ou copolymère de l'éthylène et/ou du propylène, en polyamide "cast" (extrudé en filière plate) ou biorienté, en polyester comme le polyéthylène téréphtalate "cast" ou biorienté, en polychlorure de vinyle (PVC), en polyacrylonitrile (PAN) (par exempte le Barex de la société BP), en un film multicouche à base d'EVOH (polymère éthylène-vinylacool).

La couche de support peut être en papier, en aluminium, ou en un matériau pouvant être choisi dans la même liste que celle proposée ci-dessus pour le choix de la couche thermoplastique. La couche de support et la couche thermoplastique peuvent être choisies dans le même matériau.

La matière organique a pour fonction de favoriser la délamination du film selon l'invention. Cette délamination se traduit par la division du film en au moins deux parties, dont l'une comprend la couche support et l'autre la couche thermoplastique. Cette délamination se produit en au moins une interface entre différentes couches du film selon l'invention. Cette interface peut être l'interface entre le support et la matière organique, ou l'interface entre la matière organique et la couche thermoplastique, ou, pour le cas où la matière organique comprend différentes couches, au moins une interface entre deux couches différentes au sein de la matière organique.

Le film compris dans le sac ou sachet formant un emballage selon l'invention peut comprendre plusieurs interfaces présentant cette fonction de délamination. Ce serait par exemple le cas si le film était collé sur lui-même.

L'invention est plus particulièrement adaptable aux sacs ou sachets formant des emballages comprenant des films multicouche contrecollés. En effet, la colle utilisée pour réaliser de tels films peut être l'un des constituants de la matière organique dont fait usage la présente invention. Dans un tel cas, la matière organique peut être constituée de deux couches dont l'une est la colle de contrecollage, et l'autre est un vernis, l'interface de délamination étant l'interface entre la colle et le vernis.

Les zones du film exemptes de vernis peuvent donc comprendre une couche de colle de façon à coller le support à la couche thermoplastique. Ces zones comprenant la colle mais ne comprenant pas le vernis sont exemptes de "matière organique" au sens de la présente invention puisque celle-ci, pouvant être constituée par un couple colle/vernis, a pour fonction de favoriser le délaminage du film, fonction que n'a pas la colle lorsqu'elle est appliquée sans juxtaposition de vernis. Ainsi, le film peut comprendre la couche de colle pour toute sa surface, le vernis et par voie de conséquence la matière organique n'étant appliquée que pour certaines zones.

Généralement, la couche de vernis se trouve du côté du support et la couche de colle se trouve du côté de la couche thermoplastique.

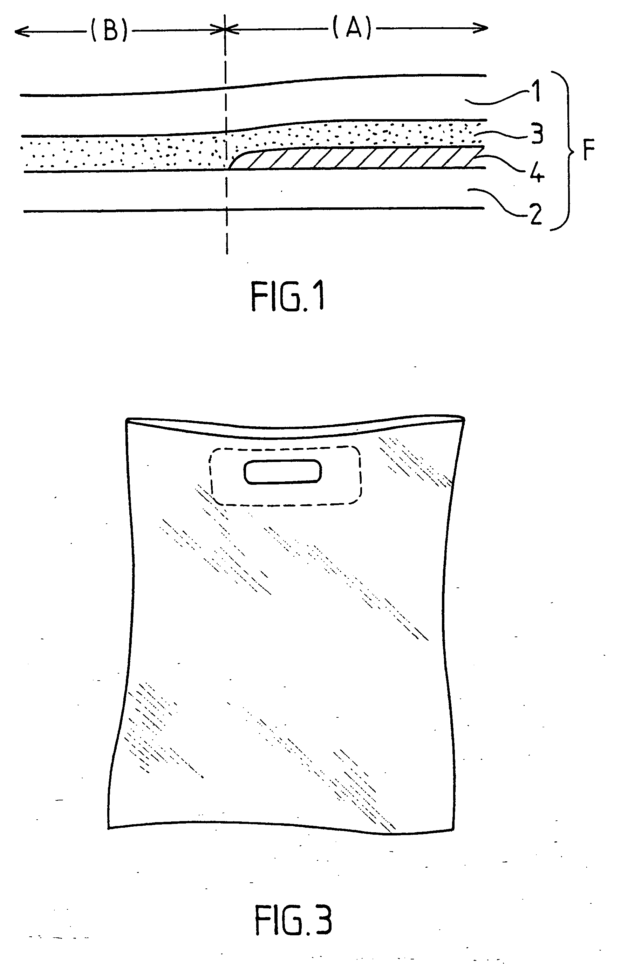

La figure 1 représente une telle structure comprenant deux zones dont l'une (A) a été traitée par le vernis, et l'autre (B) n'a pas été traitée par le vernis. Ainsi, la matière organique à l'origine de l'effet de la présente invention, constituée dans ce cas particulier de la combinaison d'une couche de colle et d'une couche de vernis juxtaposées, est présente dans la zone (A) et n'est pas présente dans la zone (B). Dans la zone (A), la couche de colle (3) est directement en contact avec, d'un côté la couche thermoplastique (1), et de l'autre côté avec la couche de vernis (4), cette dernière étant directement en contact avec la couche support (2). Dans la zone (B), la couche de colle (3) est directement en contact avec, d'un côté la couche thermoplastique (1), et de l'autre côté avec la couche support (2). L'assemblage de toutes ces couches forme un film (F) selon l'invention, lequel comprend deux régions (A) et (B) présentant des résistances différentes à la déchirure, la résistance à la déchirure de la région (A) étant supérieure à celle de la région (B). La matière de la colle (3) et la matière du vernis (4) sont choisies de façon à ce qu'une délamination se produise à leur interface (en zone A) lorsque le film subit une contrainte qui serait suffisante pour déchirer le film si le vernis était absent (comme en zone B). Si la contrainte exercée sur le film est suffisante pour déchirer le film en zone (B), la même contrainte produira en zone (A), préférentiellement une délamination à l'interface des couches de colle (3) et de vernis (4), augmentant de ce fait la résistance à la déchirure de l'ensemble du film F en zone (A).

Pour le cas où les couches principales sont en polyoléfine, la colle peut être tout type de colle utilisée pour coller une couche de polyoléfine sur une autre couche de polyoléfine. La colle peut être de la famille des polyuréthanes, notamment du type polyéther et/ou polyester.

Le vernis peut comprendre la résine entrant dans la composition des encres couramment utilisées en héliogravure ou flexogravure. Il est rappelé que pour réaliser ces encres, la résine est diluée dans l'eau (encre à l'eau) ou dans un solvant organique (encre en solvant organique). Des pigments sont incorporés dans ces encres pour donner la couleur souhaitée. Habituellement, pour réaliser une encre, des pigments sont incorporés dans la résine, puis l'eau ou le solvant organique est ajouté au mélange pigment/résine. Lorsque l'on veut diminuer la puissance de l'encre, on ajoute de cette résine (sous la forme de solution) dans l'encre pour diminuer la concentration de pigments. Ainsi, le vernis lui-même ne comprend généralement ni pigment, ni colorant. L'homme du métier connaît les encres utilisées en héliographie ou flexographie. Les fabriquants d'encre pour héliogravure ou flexogravure mettent à la disposition de leurs clients des vernis en solution, c'est-à-dire des solutions de ces résines pour que ceux-ci réalisent eux-mêmes leurs dosages suivant la puissance souhaitée de l'encre.

L'homme du métier de l'impression utilise le terme vernis à la fois pour désigner la solution de résine servant à l'application, et également pour la couche obtenue après évaporation du solvant de ladite solution. lorsqu'on parle d'un film comprenant une couche de vernis, il est cependant très clair qu'il s'agit du film obtenu après évaporation du solvant utilisé pour l'application du vernis. A titre de clarification, dans le cadre de la présente demande, le terme vernis est réservé au produit obtenu après évaporation du solvant.

Il est rappelé que deux types d'encres existent, à savoir les "encres à l'eau" et les "encres en solvant organique". Les encres à l'eau sont à base de résine acrylique. Les encres en solvant organique sont généralement classées par l'homme du métier en trois familles :
- "encres de surface" à base de nitrocellulose, nitropolyamide, polyamide ou nitropoiyuréthane,
- "encres complexables" à base de polyvinyle butiral ou de résine vinylique,
- "encres cello-émail" à base de résine vinylique ou nitroacrylique.

Dans le cas où la matière organique est un couple colle / vernis comme précédemment expliqué, l'épaisseur de la couche de vernis influence généralement la force de délaminage, de sorte que plus la couche de vernis est épaisse, plus la force de délaminage est faible. Dans un tel cas, la force de délaminage doit bien entendu être mesurée après réticulation complète de la colle, ce qui correspond généralement à une attente d'au moins 10 jours après la fabrication du film. Le cas échéant, il est possible d'ajouter à la composition du vernis une cire de silicone (par exemple la cire référencée R4174370 de TOTAL ou la cire référencée WR510171 de BASF) de façon à faire baisser la force de délaminage. Ces cires incluent notamment celles habituellement utilisées pour traiter la surface des supports d'étiquettes autocollantes. Grâce à ce traitement, les étiquettes se décollent facilement de leur support, pour ensuite être collées à l'endroit voulu. Le vernis peut comprendre cette cire, et l'introduction de la cire dans le vernis peut être réalisée par mélange du vernis en solution et de la cire, par exemple 5 à 25 % en poids de cire pour 95 à 75 % en poids de la solution de vernis proposée par le fabriquant d'encre. Généralement, le vernis peut être déposé à raison de 0,6 à 1,2 g/m² (après évaporation du solvant utilisé pour son application) et la colle à raison de 0,5 à 3 g/m².

Pour le cas où la matière organique est un couple colle/vernis, la colle et le vernis peuvent chacun être appliqués par les procédés habituellement utilisés pour ce genre de matière et bien connus en eux-mêmes de l'homme du métier. Bien entendu, ce qui est connu de l'homme du métier, c'est l'application d'une colle d'une part et l'application d'un vernis d'autre part, mais pas la juxtaposition d'une colle et d'un vernis au sein d'un film multicouche, puisque c'est là l'objet de la présente invention.

Ainsi, le vernis se dépose comme une encre sur tout type de machine d'impression, comme une machine d'héliographie ou de flexographie. Le vernis est généralement déposé sur le support destiné à former la couche support du film selon l'invention. Le vernis est déposé dans les zones repérées pour lesquelles on souhaite que-le délaminage puisse se produire. Le vernis peut être appliqué en solution à partir des solutions de résine proposées par les fabriquants d'encre afin de régler la puissance desdites encres. Le solvant de ladite solution est évaporé selon les mêmes techniques que pour évaporer les solvants. Le contre-collage est ensuite réalisé avec un film (que nous appellerons film thermoplastique), destiné à former la couche thermoplastique du film selon l'invention, la colle pouvant être d'abord appliquée sur le support portant le vernis ou sur le deuxième film. Généralement, la colle est appliquée sur le support portant le vernis. Si le film selon l'invention doit être imprimé, l'impression peut par exemple être appliquée sur le support, du côté destiné à porter le vernis, et avant application du vernis. Généralement, les zones du support portant le vernis sont différentes de celles portant l'impression. Cependant, il n'est pas exclu que le vernis soit appliqué sur des zones imprimées. La fabrication du film multicouche selon l'invention est réalisable en continu et à très grande vitesse, par exemple de 10 à 300 mètres par minute. Bien entendu, il est possible de réaliser l'opération de contrecollage en une étape indépendante de la première, c'est-à-dire "en reprise", après mise en bobine du support portant le vernis, et, le cas échéant, l'impression.

Généralement, dans le film compris dans le sac ou sachet formant an emballage selon l'invention, la couche support présente une épaisseur allant de 5 à 100 µm, la matière organique présente une épaisseur allant de 1 à 5 µm, la couche thermoplastique présente une épaisseur allant de 20 à 110 µm. Généralement, le film selon l'invention présente une épaisseur allant de 30 à 150 µm.

Suivant l'utilisation finale du film multicouche, il n'est pas exclu d'appliquer la matière organique sur la totalité de sa surface; dès lors que le phénomène de délamination doit pouvoir se produire n'importe où, ou, tout simplement s'il est jugé plus simple de réaliser un film présentant la même structure sur toute sa surface et qu'une résistance à la déchirure différente selon différentes zones du film multicouche n'est pas recherchée; Pour d'autres utilisations pour lesquelles des comportements différents sur le plan de la résistance à la déchirure dans différentes zones du film selon l'invention sont recherchées, la matière organique pourra n'être appliquée que pour une partie de la surface du film. En particulier, lorsque le film multicouche selon l'invention est destiné à la réalisation d'un sac comportant des soudures, il est préférable que la matière organique soit absente des zones de soudure car sa présence peut nuire à la solidité desdites soudures. En effet; la délamination pourrait alors se produire pendant l'opération de soudure.

Notamment pour le cas où le film est utilisé pour réaliser un emballage, la couche support se trouve généralement du côté extérieur dudit emballage et supporte généralement l'éventuelle impression sur sa face interne ou externe compte tenu de l'emballage considéré. La couche thermoplastique peut être réalisée à partir d'un film "soudant" dont l'une des fonctions est de permettre la mise en forme et l'étanchéité par des soudures à chaud de l'article que l'on se propose de réaliser à partir du film selon l'invention par exemple un emballage.

Si la couche thermoplastique doit être soudable à chaud, celle-ci est généralement en polyoléfine comme en polymère ou copolymère de l'éthylène et/ou du propylène, en polychlorure de vinyle (PVC), en polyacrylonitrile (PAN), ou, lorsque l'on en attend une meilleure résistance thermique et/ou chimique, en polyamide ou en polyester.

Le film peut servir à la réalisation d'emballages devant subir, dans le cadre de leur utilisation, une contrainte mécanique susceptible de provoquer sa déchirure. Suivant le cas, il est opportun de placer la matière organique dans ou à proximité des zones pouvant être soumises à ces contraintes. Notamment, si l'emballage doit être déchiré par l'utilisateur, mais que l'on souhaite contrôler la propagation de la déchirure, il convient de situer la matière organique hors de la zone devant être déchirée, mais à proximité, voire autour de ladite zone de façon à orienter la déchirure dans la direction souhaitée et faire obstacle à sa propagation dans les directions non souhaitées.

Le film peut également servir à la réalisation d'emballages comprenant des anses servant à le porter. Ces anses peuvent être constituées par des orifices dans le film, pouvant être réalisées par un simple percage. De façon à renforcer la zone de ces anses, il est recommandé de placer la matière organique à l'endroit de ces orifices, par exemple tout autour de ces orifices.

Selon un premier exemple, on réalise par contre-collage un film multicouche comprenant :
- une couche "support" en polypropylène biorienté de 20 µm d'épaisseur,
- une couche d'un vernis comprenant une résine nitroacrylique et une cire de silicone R4174370 de TOTAL, ledit vernis ayant été formé à partir d'un mélange de 80 % en poids d'une solution de la résine dans l'acétate d'éthyle et 20 % en poids de la cire ; la couche de vernis, appliquée sur le support en certaines zones repérées, présente une épaisseur d'environ 1 µm ;
- une couche de colle en polyuréthane de type polyéther d'une épaisseur de 2 µm, appliquée sur l'ensemble de la surface du support portant le vernis,
- une couche thermoplastique réalisée à partir d'un film "soudant" extrudé en filière plate, en copolymère du propylène et de l'éthylène (4 % en masse d'éthylène) de 25 µm d'épaisseur.

La force nécessaire au délaminage dans les zones exemptes de vernis est d'environ 450 g pour une bande de 15 cm. La force nécessaire au délaminage dans les zones comprenant le vernis est d'environ 10 g pour une bande de 15 cm.

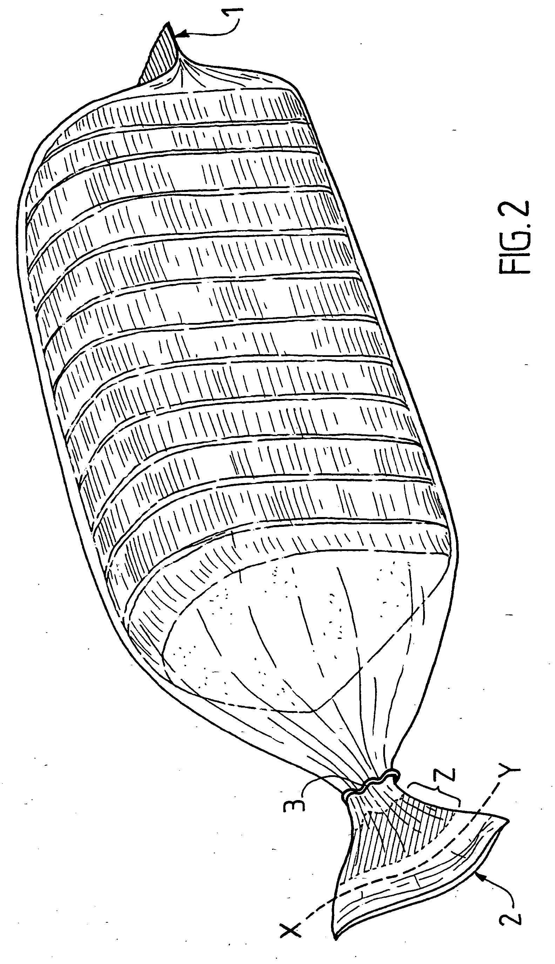

Le film a servi à confectionner le sachet représenté sur la figure 2 et contenant, à titre d'exemple, du pain en tranches. Ce sachet comprend une soudure (1) en son fond et une soudure (2) à l'autre extrémité, du côté prévu pour l'ouverture, ces deux soudures assurant une étanchéité parfaite à l'emballage. Ce sachet a été réalisé selon une technique classique de fabrication, appelée "FLOW PACK", passant par la réalisation d'un tube à partir du film selon l'invention, ledit tube comprenant une soudure longitudinale (non représentée sur la figure 2) sur toute sa longueur. Les soudures (1) et (2) sont réalisées par des barrettes de soudures écrasant le tube perpendiculairement à son axe et donc également à la soudure longitudinale.

L'emballage comporte un collier amovible (3) pour permettre la refermeture du sachet après chaque utilisation.

Le vernis n'a été appliqué que dans la zone Z hachurée de la figure (2), c'est-à-dire entre le collier amovible et la soudure (2) du côté prévu pour l'ouverture. Il est prévu que l'utilisateur ouvre le sachet en déchirant celui-ci entre la soudure (2) du côté prévu pour l'ouverture et la zone traitée par le vernis, c'est-à-dire sensiblement selon la ligne X-Y sur la figure 2. La distance entre la soudure (2) et la zone traitée par le vernis est d'environ 5 mm. La présence du vernis évite que la déchirure ne se propage en direction de la soudure (1) du fond, ce qui endommagerait sérieusement l'emballage et ne permettrait pas sa réutilisation pleinement efficace par usage du collier amovible.

Selon un second exemple, on réalise un film multicouche comprenant :
- une couche "support" en polypropylène biorienté de 30 µm d'épaisseur ;
- une couche d'un vernis comprenant une résine nitroacrylique et une cire de silicone R4174370 de TOTAL, ledit vernis-ayant été formé à partir d'un mélange de 80 % en poids d'une solution de la résine dans l'acétate d'éthyle et 20 % en poids de la cire ; la couche de vernis, appliquée sur le support en certaines zones repérées, présente une épaisseur d'environ 1 µm ;
- une couche de colle en polyuréthane de type polyéther d'une épaisseur de 2 µm, appliquée sur l'ensemble de la surface du support portant le vernis,
- une couche thermoplastique réalisée à partir d'un film "soudant" en polyéthylène métallocène de 100 µm.

Un tel film peut servir à la fabrication d'un sac en plastique tel que celui représenté sur la figure 3. Le vernis n'a été appliqué que dans les zones du film destinées à être percées de façon à faire office de anse, à savoir la zone entourée de pointillés sur la figure 3. Cette zone présente une résistance améliorée à la déchirure. Ainsi, la tendance à la délamination dans cette zone compense au moins partiellement la fragilisation produite par le perçage du sac pour constituer les anses. De ce fait, le sac peut supporter une charge plus importante en comparaison avec un sac identique non traité par le vernis dans la zone de la anse.

## Revendications

1. Sac ou sachet formant un emballage comprenant un film et des soudures, ledit emballage comprenant une zone pouvant être soumise à une contrainte mécanique susceptible de provoquer la déchirure dudit film, ledit film comprenant une couche support, une couche thermoplastique et une couche de colle située entre ladite couche de support et ladite couche thermoplastique, **caractérisé en ce que**
a) ledit film comprend une couche de matière organique entre ladite couche support et ladite couche thermoplastique,
b) ladite couche de matière organique est située dans ladite zone, de manière à augmenter dans ladite zone dudit emballage la résistance à la déchirure en favorisant la délamination dudit film lorsque ce dernier est soumis à ladite contrainte mécanique,
c) lesdites soudures sont localisées hors de ladite zone dudit emballage.

2. Sachet selon la revendication 1, **caractérisé en ce que** la matière organique est située de façon à faire obstacle à une propagation de déchirure, ladite déchirure devant être amorcée dans une zone dudit emballage exempte de ladite matière organique, de façon à diriger ladite déchirure dans ladite zone dudit emballage exempte de ladite matière organique.

3. Sac selon la revendication 1, **caractérisé en ce qu'**il comprend des anses constituées par des orifices réalisés dans le film, la matière organique étant située à l'endroit desdits orifices.

4. Sac ou sachet selon une quelconque des revendications 1 à 3, **caractérisé en ce que** la présence de la matière organique se traduit par une force de délaminage inférieure à 200 g pour une largeur de film de 15 mm, ladite force de délaminage étant déterminée selon la norme française NF-T-54034.

5. Sac ou sachet selon la revendication précédente, **caractérisé en ce que** la force de délaminage est inférieure à 50 g pour une largeur de film de 15 mm.

6. Sac ou sachet selon l'une des revendications précédentes, **caractérisé en ce que** la couche support comprend un polymère ou copolymère de l'éthylène et/ou du propylène et **en ce que** la couche thermoplastique comprend un polymère ou copolymère de l'éthylène et/ou du propylène.

7. Sac ou sachet selon l'une des revendications précédentes, **caractérisé en ce que** la couche de matière organique se compose d'une couche de vernis comprenant une résine pour encre d'héliogravure ou de flexogravure du côté de la couche support.

8. Sac ou sachet selon la revendication précédente, **caractérisé en ce que** la colle est également appliquée en des endroits exempts de vernis de façon à coller la couche support à la couche thermoplastique.

9. Sac ou sachet selon la revendication 7 ou 8, **caractérisé en ce que** le vernis ne comprend ni pigment ni colorant.

10. Sac ou sachet selon l'une des revendications 7 à 9, **caractérisé en ce que** le vernis comprend une cire de silicone.

11. Sac ou sachet selon l'une des revendications précédentes, **caractérisé en ce que** le film comprend des zones exemptes de matière organique, la force de délaminage des zones exemptes de matière organique étant supérieure à 200 g pour une largeur de film de 15 mm, ladite force de délaminage étant déterminée selon la norme française NF-T-54034.

12. Sac ou sachet selon la revendication précédente **caractérisé en ce que** la force de délaminage des zones exemptes de matière organique est supérieure à 300 g pour une largeur de film de 15 mm.

## Claims

1. A bag or a sachet forming a packing comprising a film and welds, said packing comprising a zone able to be subjected to mechanical stress and apt to bring about the tearing of said film, said film comprising a support layer, a thermoplastic layer and a layer of adhesive located between said support layer and said thermoplastic layer, **characterised by** the fact that
a) said film comprises a layer of organic material between said support layer and said thermoplastic layer,
b) said layer of organic material is located in said zone so as to increase resistance to tearing of said zone of said packing, promoting the delamination of said film when it is subjected to said mechanical stress.
c) said welds are located outside said zone of said packing

2. A sachet according to Claim 1, **characterised by** the fact that the organic material is so located as to act as a barrier against the propagation of tearing, said tearing having to be triggered in a zone of said packing that is free from the organic material and so as to direct said tearing into said zone of said packing, which is free from said organic material.

3. A bag or a sachet according to Claim 1, **characterised by** the fact that it comprises the handles constituted by openings made in the film, the organic material being located in an area of said openings.

4. A bag or a sachet according to one of the Claims 1 to 3, **characterised by** the fact that the presence of the organic material results in a delamination force lower than 200 g for a width of film of 15 mm, said delamination force being determined according to the French standard NF-T-54034.

5. A bag or sachet according to the preceding Claim, **characterised by** the fact that the delamination force is less than 50 g for a width of film of 15 mm.

6. A bag or a sachet according to one of the foregoing Claims, **characterised by** the fact that the support layer comprises an ethylene and/or a polypropylene polymer and by the fact that the thermoplastic layer comprises a polymer or a copolymer of ethylene and/or propylene.

7. A bag or a sachet according to one of the foregoing Claims, **characterised by** the fact that the layer of organic material consists of a layer of varnish containing a photogravure or a flexographic ink resin on the support layer.

8. A bag or a sachet according to one of the foregoing Claims, **characterised by** the fact that the adhesive is also applied in parts free from varnish so as to join the support layer to the thermoplastic layer.

9. A bag or a sachet according to Claim 7 or 8, **characterised by** the fact that the varnish does not contain either a pigment or a dye.

10. A bag or a sachet according to one of the Claims 7 to 9, **characterised by** the fact that the varnish contains a silicone wax.

11. A bag or a sachet according to one of the foregoing Claims, **characterised by** the fact that the film comprises zones free from organic material, the delamination force in the zones free from organic material being greater than 200 g for a width of film of 15 mm, said delamination force being determined according to the French standard NF-T-54034.

12. A bag or a sachet according to the preceding Claim, **characterised by** the fact that the delamination force in the zones free from organic material is greater than 300 g for a width of film of 15 mm.

## Patentansprüche

1. Tasche oder Beutel, darstellend eine Verpackung bestehend aus einer Folie und Schweißungen, wobei die Verpackung einen Bereich aufweist, der einer mechanischen Belastung aussetzbar ist, welche zum Reißen der Folie führen kann, wobei die Folie eine Trägerschicht, eine thermoplastische Schicht und eine zwischen der Trägerschicht und der thermoplastischen Schicht gelegene Klebstoffschicht aufweist, **dadurch gekennzeichnet,**
a) **dass** die Folie zwischen der Trägerschicht und der thermoplastischen Schicht eine Schicht aus organischem Material aufweist,
b) **dass** die Schicht aus organischem Material in dem genannten Bereich liegt, um in diesem Bereich der Verpackung die Reißfestigkeit zu erhöhen, indem die Trennung der Folie begünstigt wird, wenn diese der mechanischen Belastung ausgesetzt ist,
c) **dass** die Schweißungen außerhalb dieses Bereichs der Verpackung liegen.

2. Beutel nach Anspruch 1, **dadurch gekennzeichnet, dass** das organische Material so gelegen ist, dass es eine Rissausbreitung behindert, wobei der Riss in einem Bereich der Verpackung initiiert werden muss, der frei von organischem Material ist, um den Riss in den von organischem Material freien Bereich der Verpackung zu leiten.

3. Tasche nach Anspruch 1, **dadurch gekennzeichnet, dass** sie Traggriffe aufweist, weiche aus in der Folie ausgebildeten Öffnungen bestehen, wobei das organische Material an der Stelle der Öffnungen gelegen ist.

4. Tasche oder Beutel nach irgendeinem der Ansprüche 1 bis 3, **dadurch gekennzeichnet, dass** sich das Vorhandensein des organischen Materials in einer Trennkraft kleiner als 200 g bei einer Folienbreite von 15 mm äußert, wobei die Trennkraft nach der französischen Norm NF-T-54034 bestimmt ist.

5. Tasche oder Beutel nach dem vorhergehenden Anspruch, **dadurch gekennzeichnet, dass** die Trennkraft kleiner als 50 g bei einer Folienbreite von 15 mm ist.

6. Tasche oder Beutel nach einem der vorhergehenden Ansprüche, **dadurch gekennzeichnet, dass** die Trägerschicht ein Ethylen- und/oder Propylenpolymer bzw. -copolymer aufweist und dass die thermoplastische Schicht ein Ethylen- und/oder Propylenpolymer bzw. -copolymer aufweist.

7. Tasche oder Beutel nach einem der vorhergehenden Ansprüche, **dadurch gekennzeichnet, dass** die Schicht aus organischem Material aus einer Lackschicht besteht, die trägerschichtseitig ein Harz für Tiefdruck- oder Flexodruckfarbe aufweist.

8. Tasche oder Beutel nach dem vorhergehenden Anspruch, **dadurch gekennzeichnet, dass** der Klebstoff auch an lackfreien Stellen aufgebracht ist, um die Trägerschicht auf die thermoplastische Schicht zu kleben.

9. Tasche oder Beutel nach Anspruch 7 oder 8, **dadurch gekennzeichnet, dass** der Lack weder Pigment noch Farbstoff enthält.

10. Tasche oder Beutel nach einem der Ansprüche 7 bis 9, **dadurch gekennzeichnet, dass** der Lack ein Silikonwachs enthält.

11. Tasche oder Beutel nach einem der vorhergehenden Ansprüche, **dadurch gekennzeichnet, dass** die Folie Bereiche aufweist, die frei von organischem Material sind, wobei die Trennkraft der von organischem Material freien Bereiche größer als 200 g bei einer Folienbreite von 15 mm ist, wobei die Trennkraft nach der französischen Norm NF-T-54034 bestimmt ist.

12. Tasche oder Beutel nach dem vorhergehenden Anspruch, **dadurch gekennzeichnet, dass** die Trennkraft der von organischem Material freien Bereiche größer als 300 g bei einer Folienbreite von 15 mm ist.
